# EUROPEAN PATENT APPLICATION

(11) **EP 1 417 999 A2**
(43) Date of publication of application: **12.05.2004**
(21) Application number: 03394106.3
(22) Date of filing: 11.11.2003
(51) Int. Cl.: B01F 7/24, B01F 15/02, A01K 5/00

(54) **An improved fodder mixing and dispensing apparatus**

(30) Priority: 11.11.2002 IE 20020872; 31.01.2003 IE 20030054; 01.09.2003 IE 20030631
(71) Applicant: Hughes, Patrick, County Kilkenny (IE); Hughes, John, County Carlow (IE)
(72) Inventor: Hughes, Patrick, County Kilkenny (IE); Hughes, John, County Carlow (IE)
(74) Representative: McCarthy, Denis Alexis

(57) **Abstract**

A fodder mixing and dispensing apparatus comprising a container 2 with an inlet for the receipt of fodder, an outlet 26 in a wall of the container, a centrally located rotor 6 with a vertically extending axis of rotation and a constant diameter auger 8. The auger 8 is operable to drive material in an upward direction. Anti-clogging means are located above the outlet 26 to prevent fodder material above the outlet from clogging the outlet when the apparatus is in dispensing mode and the discharge door is clear. An elevator 28 is pivotally mounted on a support, the support being operable to move between a position in which the elevator 28 receives the material discharged from the outlet door of the container of the apparatus of the invention and a transport position. The elevator 28 is also operable to be moved between a lowered and a raised orientation. One or more pivotal blade members 16 are mounted on the auger 8 so as to assist in the chopping of the fodder, and are pivotal against a stop in a direction opposite to the rotation of the auger on encountering a large mass of fodder thereby shortening the blade length of the blade member 16 and thereby reducing the power required to cut through the fodder

## Description

The present invention relates to an animal fodder mixing and dispensing apparatus. In particular the invention relates to an apparatus having a vertical auger used for fodder mixing and chopping.

Prior art fodder mixing and dispensing apparatus involves use of a tapered auger of small pitch. This has the disadvantage that fodder is slow to clear and a uniform mix is difficult to obtain. In addition conventional designs are not well suited to mixing fodder such as silage or baled hay which are dense and retain a great deal of moisture.

The present invention seeks to provide an improved fodder mixing and dispensing apparatus and in particular an improved means of dispensing the mixed material.

The present invention provides a fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms projecting to the container sides close to the container base and aiding the movement of material during the use of the apparatus, the mixing arms having deflecting surfaces adapted to lift material as the rotor turns and anti-clogging means located above the outlet to prevent fodder material above the outlet from clogging the outlet when the apparatus is in dispensing mode and the discharge door is clear.

Advantageously, the anti-clogging means comprises a shelf.

Preferably, the shelf is mounted on the inside of the container above the outlet door, projects downwards and inwards at an angle from the container sides, rises in the direction of the auger spiral, has a wider portion proximal the auger and a narrower portion distal the auger and the shelf has a cover protruding from the edge of the shelf at the widest portion of the shelf into the interior of the container and out to the container sides.

The cover may extend along a part of the length of the shelf.

Conveniently, one edge of the shelf is operable to slidably move along the container wall and the opposite edge is pivotally connected to the cover, said cover being connected pivotally to the container wall, thereby allowing the extent of the projection of the shelf into the container to be varied.

Alternatively, the anti-clogging means comprise a rotatable impeller mounted above the outlet.

Preferably, the impeller comprises an elongate cylindrical body having vanes protruding from its surface, the vanes extending along a part of the length of the cylindrical body of the impeller; and is operable to move material located around it away from the outlet.

Conveniently, container walls taper downwards to the base of the container and inwards to the centre of the base of the container.

Ideally, the mixing arms have their upper surfaces inclined rearwards and upwards relative to the direction of rotation of the auger and the ends of the mixing arms pass close to the container outlet door as the rotor turns.

Advantageously, the auger comprises knife blades, each knife blade extending outwardly from an auger flight and, optionally, sweeping back from the direction of rotation of the auger.

The present invention also comprises a fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms projecting to the container sides close to the container base and aiding the movement of material during the use of the apparatus, the mixing arms having deflecting surfaces adapted to lift material as the rotor turns and including an elevator pivotally mounted on a support, the support being operable to move between a position in which the elevator receives the material discharged from the outlet door of the container of the apparatus of the invention and a transport position; and the elevator being operable to be moved between a lowered and a raised orientation.

Conveniently, retainer wings are located along front and rear walls of the container on the inside of the container at a height above the top of the auger and below the top of the container; and optionally the retainer wings slope downwards and inwards

Preferably, a plate or a knife is mounted externally on the container and is operable to project into the container.

1. A fodder mixing and dispensing apparatus as claimed in Claim 13, in which the container outlet door has angled sides assisting in the discharge of the material.

The present invention further provides, a fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms projecting to the container sides close to the container base and aiding the movement of material during the use of the apparatus, the mixing arms having deflecting surfaces adapted to lift material as the rotor turns wherein one or more pivotal blade members are mounted on the auger so as to assist in the chopping of the fodder, the or each blade member being pivotal against a stop in a direction opposite to the rotation of the auger on encountering a large mass of fodder thereby shortening the blade length of the blade member and thereby reducing the power required to cut through the fodder.

Advantageously, the or each blade member is provided with biasing means operable to return the blade member to its fully extended position.

Preferably, the or each blade member is provided with an adjusting mechanism allowing a sweep back angle of the blade relative to the direction of rotation of the auger to be adjusted.

Ideally, the adjusting mechanism is pivotally connected with the blade member.

Advantageously, the adjusting mechanism comprises an adjusting means allowing the sweep back angle of the blade relative to the direction of rotation of the auger be adjusted and set prior to the use of the apparatus.

Ideally, the adjusting means comprises fixing means for fixing the knife blade at one of a range of predetermined sweep back angles relative to the direction of rotation of the auger.

The biasing means may be a spring mechanism or a hydraulically operated mechanism.

The invention will hereinafter be more particularly described with reference to the accompanying drawings, which show by the way of example only, a number of embodiments of a fodder mixing and dispensing apparatus according to the invention. In the drawings:

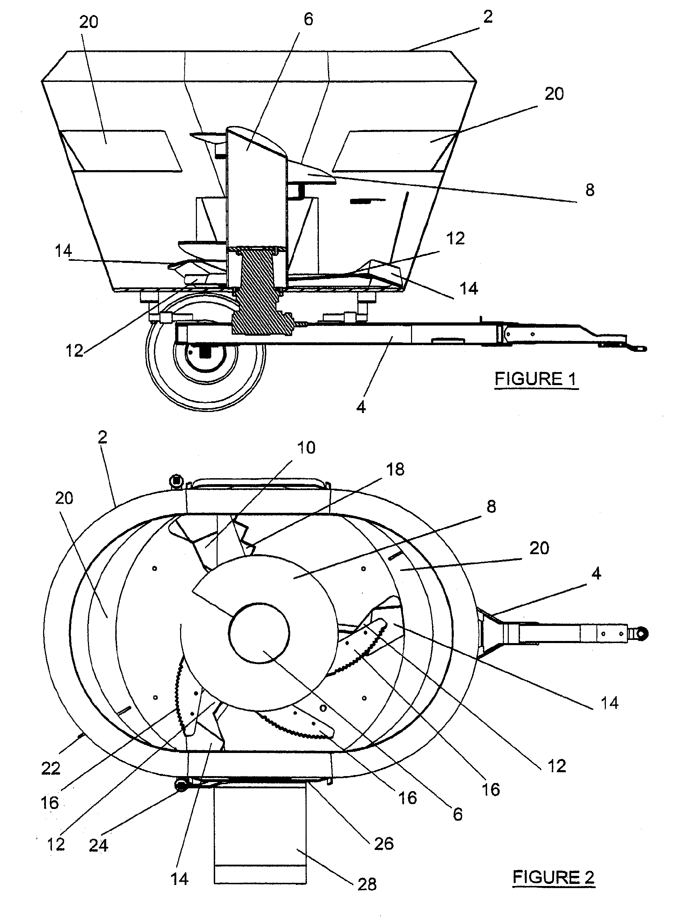

Figure 1 is a cross-sectional side view of a first embodiment of the apparatus;
Figure 2 is a plan view from above of a first embodiment of the apparatus showing an auger mixer within the container of the apparatus;

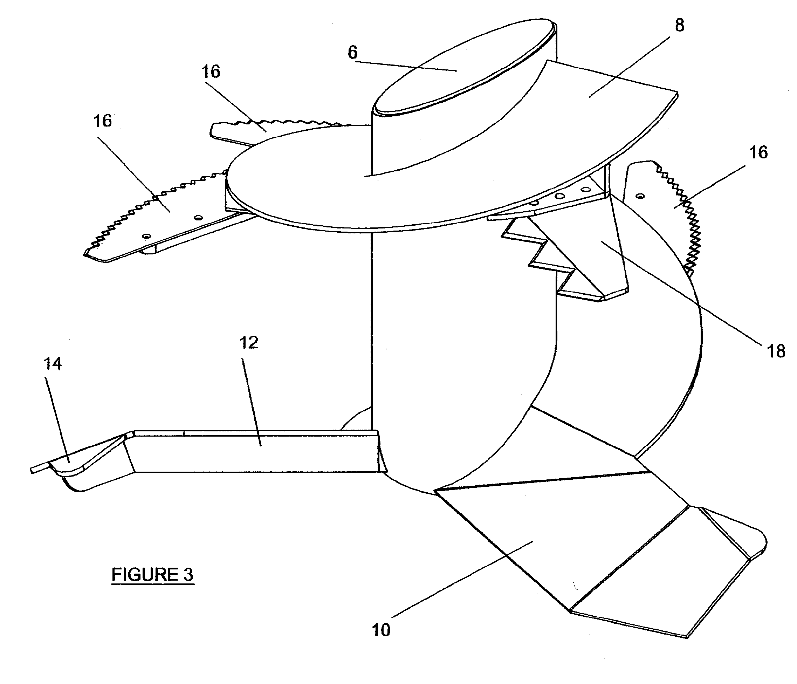

Figure 3 is a perspective view of the auger mixer;

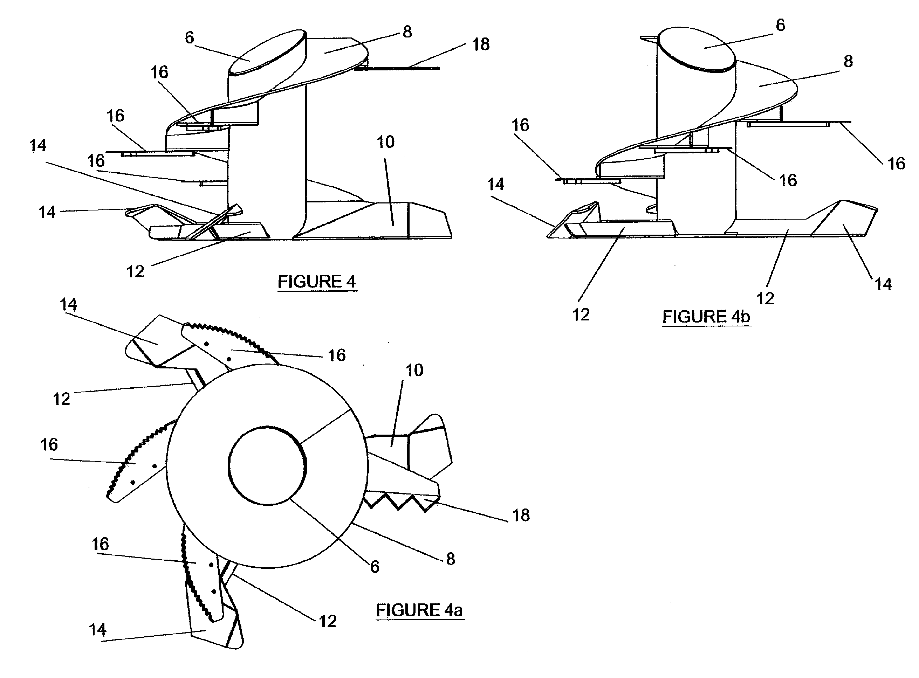

Figure 4 is a side view of the auger mixer from a front angle, Figure 4a is a plan view of the auger mixer and Figure 4b is a side view of the auger mixer from a second angle.

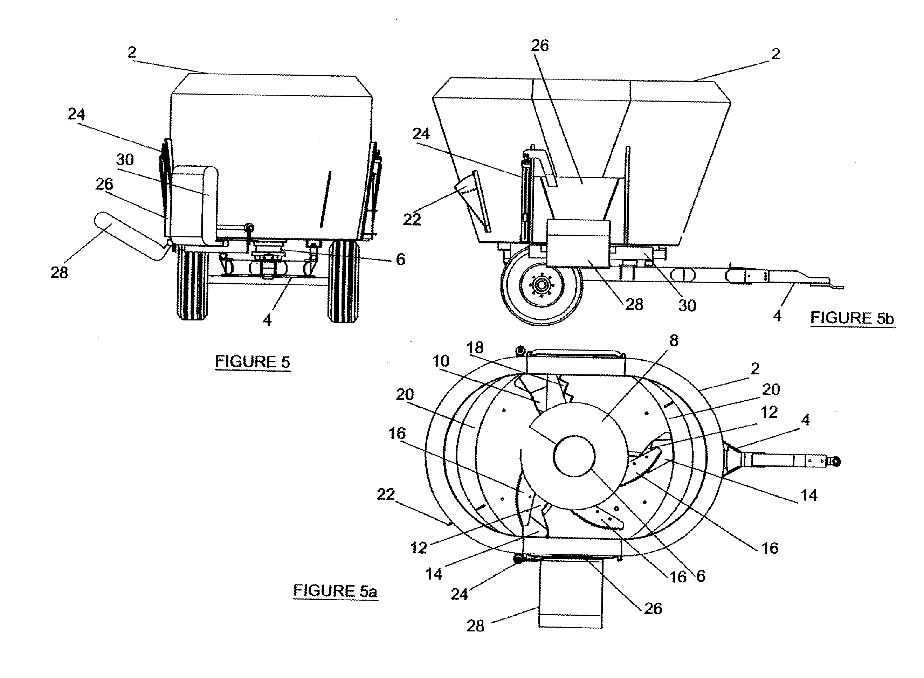

Figure 5 is a rear view of the apparatus;
Figure 5a is a further plan view on a different scale to that of Figure 2;
Figure 5b is a side view of the apparatus at the side where the dispensing mechanism is located;

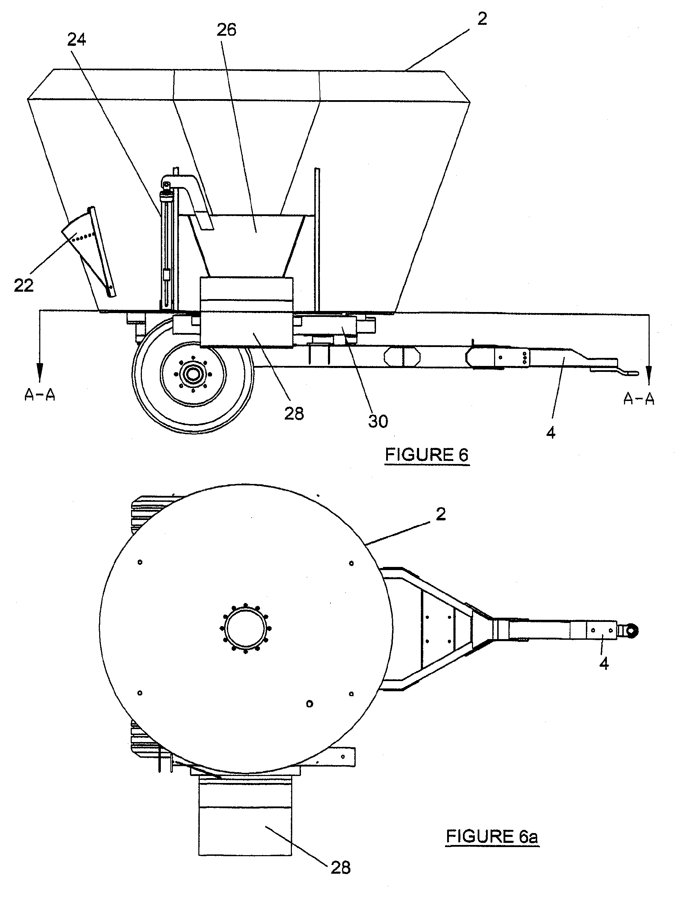

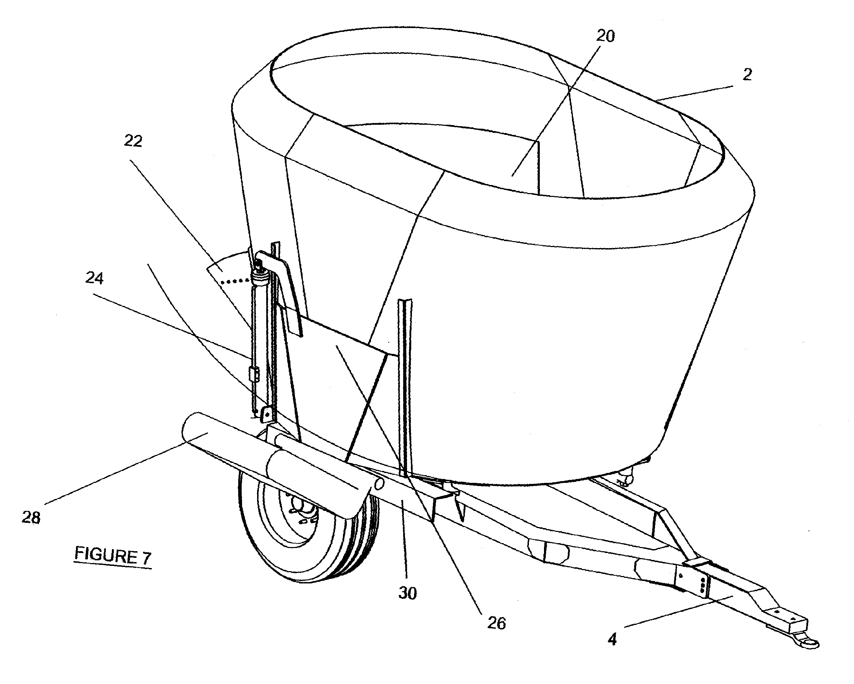

Figure 6 is a side view of the apparatus and Figure 6a is a section of the base of the apparatus;
Figure 7 is a perspective view of the fodder mixing and dispensing apparatus;
Figure 7a is a perspective view of the fodder mixing and dispensing apparatus showing a second position of the elevator;
Figure 8a is a cross-sectional side view of a second embodiment of the apparatus,
Figure 8b is a cross-sectional rear view of the apparatus along the line B-B of Figure 8a and Figure 8c is an enlarged view of detail A of Figure 8a;
Figure 9 is a cross-sectional side view of the second embodiment without the auger mixer;
Figure 9a is a perspective view of a portion of the inside of the container of the second embodiment, showing the shelf and cover arrangement;
Figure 10a is a cross-sectional side view of a third embodiment of the apparatus which includes an impeller located above the door, Figure 10b is a cross-sectional view along the line Y-Y of Figure 10a, Figure 10c is an enlarged view of detail F of Figure 10b and Figure 10d is an enlarged view of detail E of Figure 10a;
Figure 11 is a rear view of a fourth embodiment of the apparatus which includes a shelf connected pivotally to the container wall through use of a slide and Figure 11 a is an enlarged view of detail C of Figure 11;
Figure 12 is a perspective view of a fifth embodiment of the auger having adjustable knife blades.
Figure 13 is a plan view of the auger of Figure 12;
Figure 14 is a cross-sectional side view of the auger of Figure 12;
Figure 15 is a perspective view of a sixth embodiment of the apparatus having adjustable knife blades.
Figure 16 is a plan view of the auger of Figure 15; and
Figure 17 is a cross-sectional side view of the auger of Figure 15.

### DETAILED DESCRIPTION OF THE INVENTION

Referring to the drawings, the first embodiment of a fodder mixing and dispensing apparatus comprises a frusto-conical mixing container 2, mounted on a trailer chassis 4. A vertical rotor shaft 6 projects from the centre of the container base and has an auger flight 8 fixed to its exterior.

Adjacent the container base, the shaft 6 has at equal angular intervals a lifting arm 10 which connects to the bottom of the auger flight 8; and two mixing arms 12 having paddles 14 at their outer ends.

The lifting arm 10, mixing arms 12 and paddles 14 all have their upper faces inclined rearwards and upwards in the direction of motion. This causes the material through which they pass to be pushed upwards.

Three knife blades 16 project outwards from the auger flight 8 at positions spaced apart both angularly and vertically. The knife blades 16 are swept back from the direction of rotation and are at the same angle as the auger flight 8 at their point of contact. The knife blades do not extend to the container walls, being shorter than the arms.

A further knife blade 18 is located towards the top of the rotor shaft 6; directly under the highest point of the auger flight 8. Unlike the other knife blades 16, this knife blade projects out horizontally from the rotor shaft, and has much larger blade teeth. This is to facilitate the quick break up of large masses of fodder as they enter the container.

At a height just above knife blade 18, located on the front and rear walls of the container 2 are retainer wings 20 which project outwards from the container interior and slope in a downward direction. These wings have the effect of stopping material in the mixer from shooting upwards, retaining it in the mixing and cutting zones below. Knife blade 18 projects to the edge of the retainer wings 20.

The rotor is driven by a gearbox providing rotation in one direction only, clockwise as seen from above. The auger flight drives material upwards away from the arms 10, 12 at the container bottom. Fresh material thus drops by gravity from the areas outside the path of the auger.

Under certain conditions the material in the container will rotate with the auger, impairing effective operation of the mixer. To overcome this problem a fixed knife or plate 22 mounted externally in the periphery of the container 2 is deployed hydraulically to project into the container 2 and so prevent mixed material from rotating with the auger.

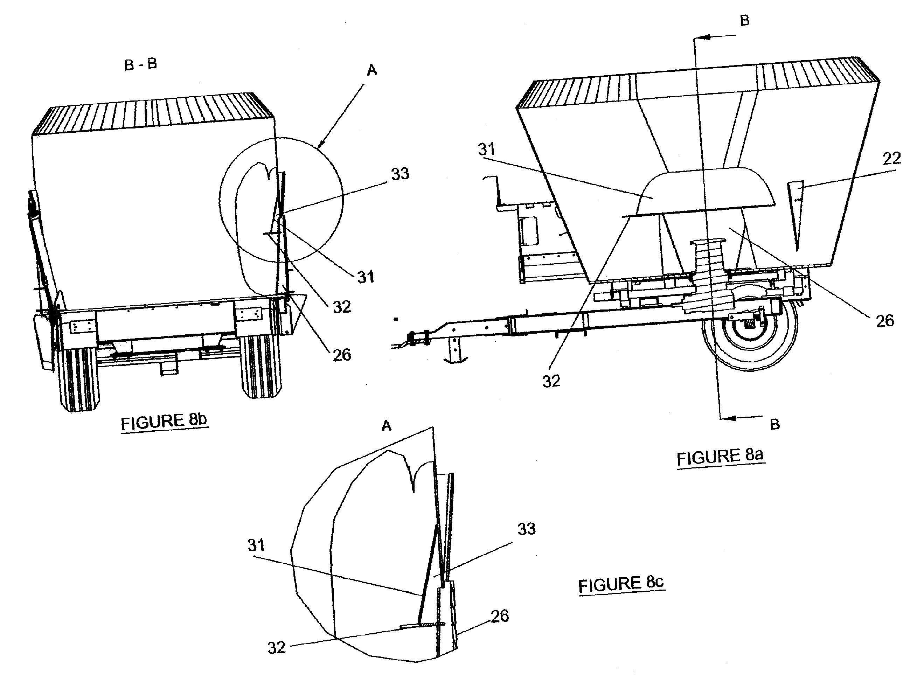

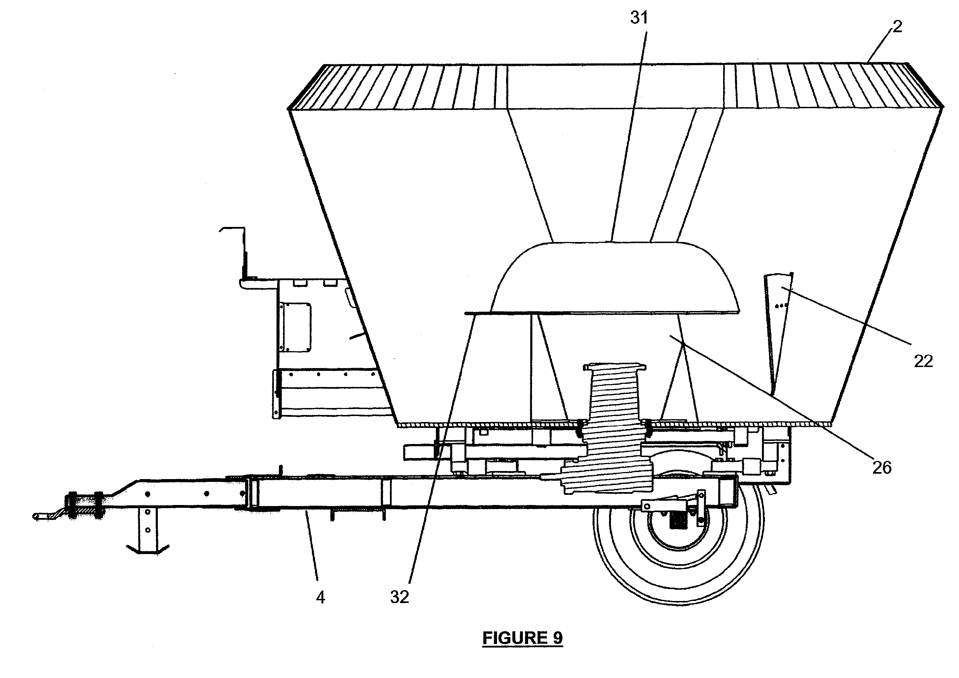

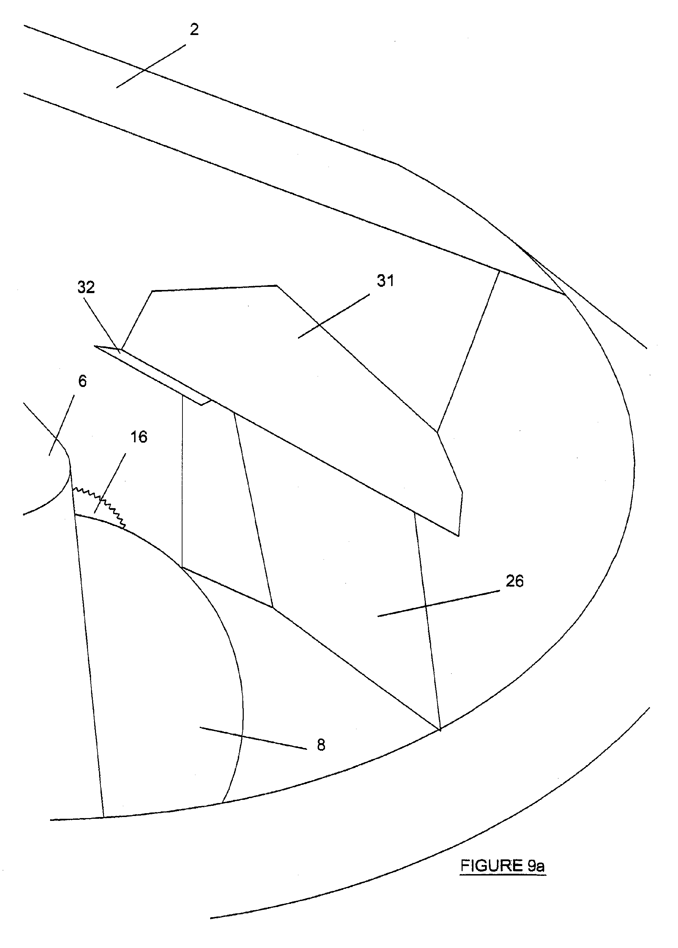

The second embodiment shown in Figures 8, 9 and 9a is similar to the first embodiment but includes a shelf 31 located above the container outlet door 26. The shelf projects downwards and inwards at an angle to the container sides, rising in the direction of the auger flight 8.

At the point on the shelf 31 at which the auger flight 8 starts to rotate by the outlet door 26, a cover 32 projects from the edge of the shelf. The cover projects both into the container interior and out to the container sides, the latter having the effect of restricting material from lodging in the underside 33 of the shelf.

The cover 32 extends a distance of 100mm along the length of the shelf, projecting out a distance of 75mm from the edge of the shelf.

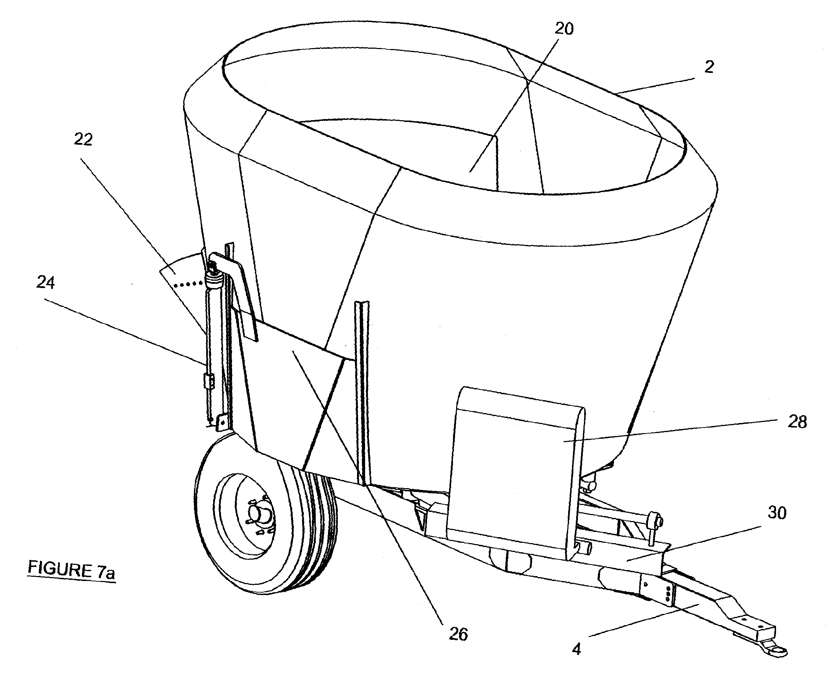

Upon sufficient mixing the material in the container can be discharged by operating a hydraulic ram 24 to lift the container door 26 allowing the material to spill onto an elevator 28 pivotally mounted on a movable support 30. The movable support 30 can be drawn aside from the container outlet door 26 to the proximity of the front side of the container, and the elevator 28 can be lifted into an upright position (shown on Figure 7a) so as not to protrude beyond the external dimensions of the apparatus providing for safe transportation of the apparatus.

The sides of the container door 26 are at an angle to its centre, stopping lumps of material building up during discharge. The paddles 14, which pass close to the door assist discharge. The plate 22 adjacent to the door can also be deployed at this time to aid efficient discharge of material.

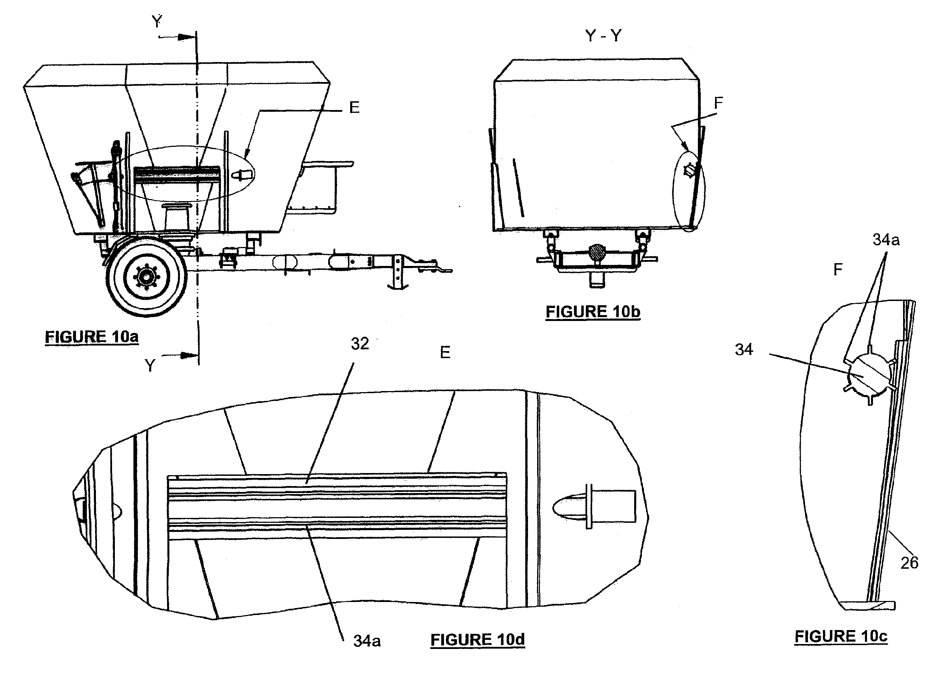

The third embodiment shown in Figure 10 differs from the second embodiment in that it includes an impeller 34 located above the outlet door 26. The impeller 34 is operable to move material located above the container door 26 inwards by rotating in an anticlockwise direction as shown in Figure 10c. The impeller is cylindrical in shape with vanes 34a protruding from its surface at equal angular intervals.

Material is dispensed from the container in the same manner as described in relation to the second embodiment.

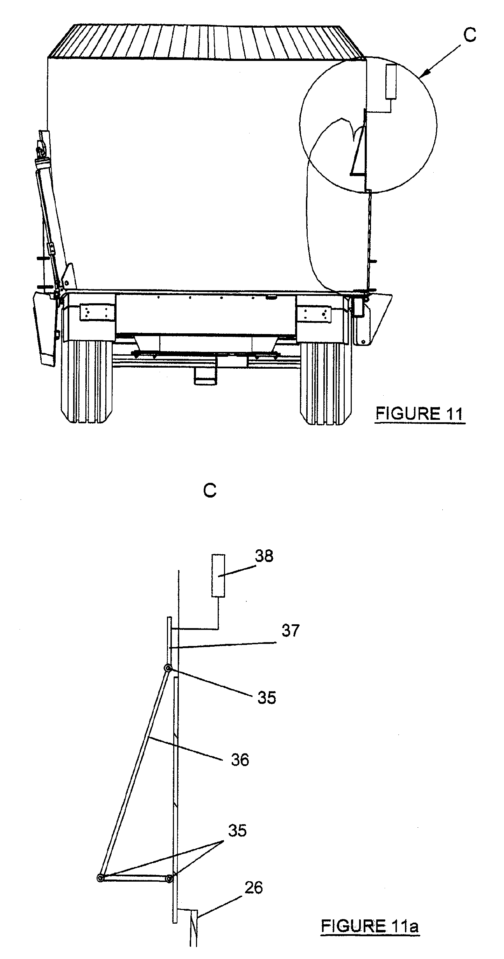

The fourth embodiment of the apparatus shown in Figure 11 differs from the second embodiment in that a shelf 36 is connected pivotally to the container wall using a slide 37.

The shelf 36 has pivots 35 at its ends and is located directly above the container outlet door 26. The upper end of the shelf is connected to a slide 37 located above the shelf on the container wall. A hydraulic ram 38 located on the container exterior is operable to project the shelf 36 into the container by moving the upper end of the shelf along the slide 37. The shelf can be retracted to a flat position against the container wall when the apparatus is mixing and can be deployed to project into the container when dispensing commences.

The container door 26, the shelf 31 and the impeller 34 can be located on either or both sides of the container 2.

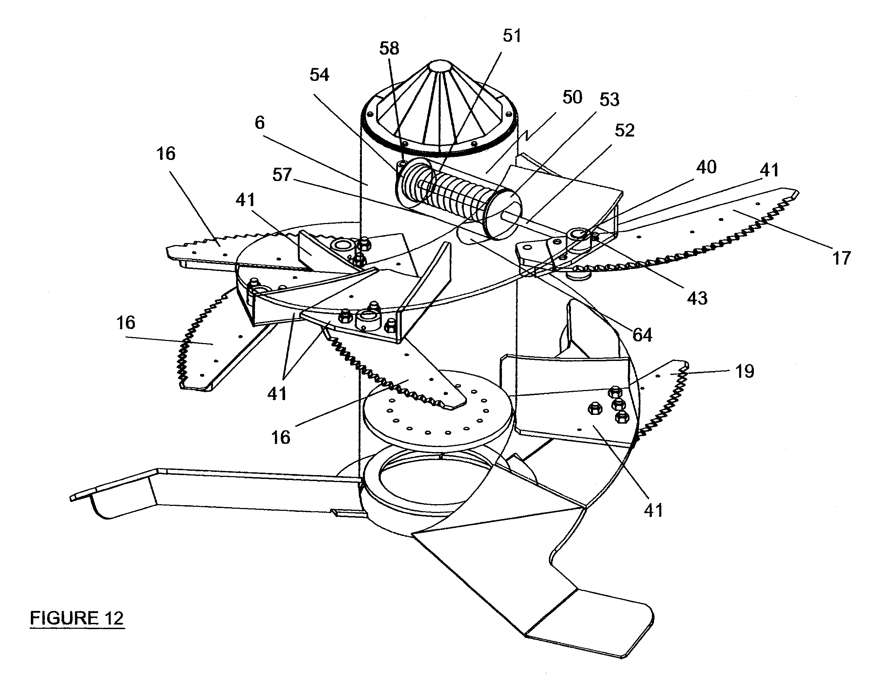

Figure 12 to Figure 14 show a fifth embodiment of auger with adjustable knife blades which can also be used in the above described embodiments of the invention. This embodiment differs from the previously described embodiments of the apparatus in that the knife blades 16 and 17 are pivotally mounted on brackets 41 below the auger flight 8 in a substantially horizontal plane about substantially vertical pivot pins 40. This enables an operator to select and set the sweep back angle of the blades 16 and 17 relative to the direction of rotation of the auger prior to the use of the apparatus in accordance with conditions of use of the apparatus.

For example, the knife blades 16, 17 can be swept further back relative to the direction of rotation of the auger and fixed in position if the apparatus of the invention is intended to be used for cutting particularly dense and moist material.

Also, the sweep back angle of the knife blades 16, 17 can vary relative to the direction of rotation of the auger when the auger is in use by connecting an end of the knife blade 16,17 proximal to the pivot pin 40 to a biasing means 50, 70 which is housed in the auger. This reduces the risk of damage to the knife blades 16,17 if they come into contact with especially hard material or a large mass of material.

The knife blades 16, 17 are mounted on brackets 41 which extend laterally from and are supported by the rotor shaft 6, the brackets 41 extending from positions which are spaced apart both angularly and vertically. The blades 16, 17 and brackets 41 are disposed below the auger flight. The knife blades 16, 17 are pivotally movable about pins 40.

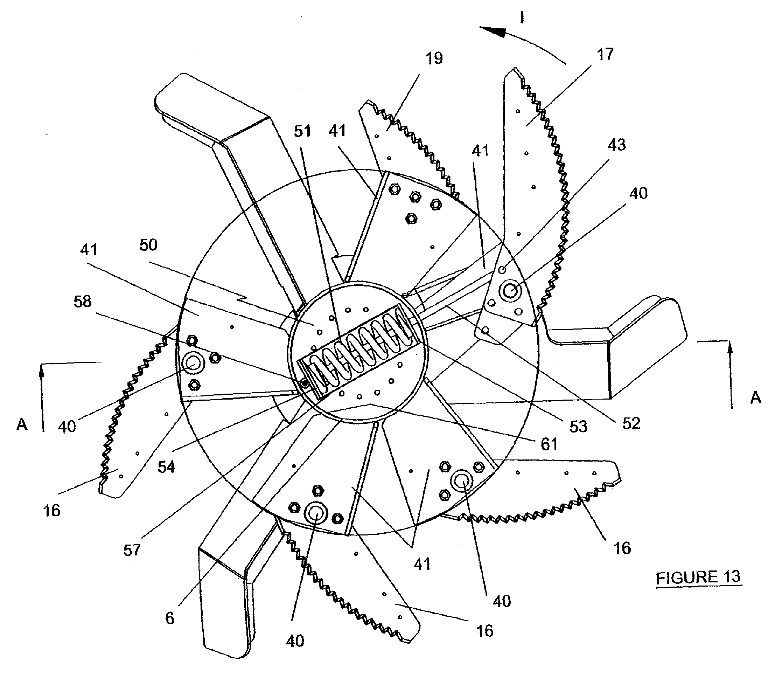

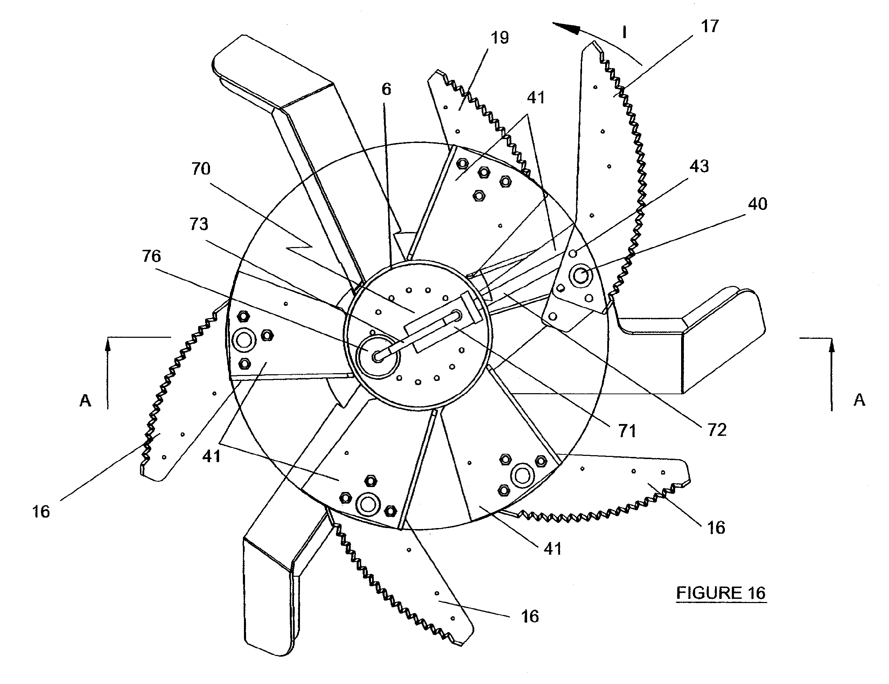

The pivotal connection of the knife blades 16, 17 with the brackets 41 via pivot pins 40 allows the knife blades to be swept backwards (as indicated by arrow I on Figures 13 and 16) relative to the direction of rotation of the auger if a knife blade 16, 17 meets a substantial counterforce from a large or hard piece of material delivered into the container 2 when the apparatus of the invention is in use. This allows reduced mutual forces between the knife blade 16, 17 and the material resulting in a safer cutting action thereby reducing the risk of knife blade 16, 17 partially or fully snapping off the auger and becoming lodged in the fodder material or at least reduces the risk of the knife blades 16, 17 being damaged in some way.

A spring mechanism 50 provides the biasing means for knife blades 16, 17 (shown only for the knife blade 17) in this embodiment of auger. This spring mechanism 50 allows a knife blade 16, 17 to be swept backwards relative to the direction of rotation of the auger until the resistive force of the spring mechanism 50 overcomes the force acting on the knife blade 16, 17 at which point the blade 16, 17 springs back to its original neutral position.

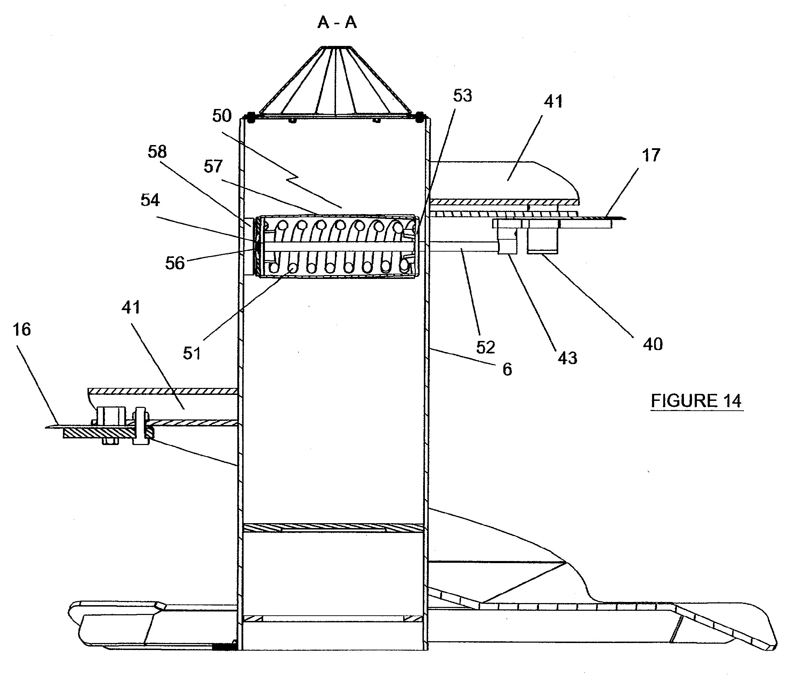

The spring mechanism 50 includes a substantially cylindrical housing 57 positioned substantially horizontally inside the rotor shaft 6. The housing 57 is movably mounted on the inner surface 61 of the rotor shaft 6 by means of a hinge 58. A spring 51 is disposed longitudinally inside the housing 57. The spring 51 is attached at one end to a base 53 of the container 57 and to a plate 54 which is slidably mounted in the container 57 at its opposite end. A rod 52 is disposed within the spring and along the longitudinal axis of the spring 51. The rod 52 is coupled with the plate 54 by means of a nut 56 (Figure 14) at one end and the other end of the rod 52 extends through the base 53 and projects outside the rotor shaft 6 via a slot 64 (see Figure 12) and is pivotally connected with knife blade 17 via a pin 43.

The rod 52 is capable of translating about the longitudinal axis of the container 57 as the knife blades are swept backwards by resistive forces of heavy/dense fodder falling into the apparatus, compressing the spring 51. When the resistive forces are removed the spring 51 releases and returns the knife blade 16, 17 into its initial neutral position when heavy and/or dense fodder has been cut and mixed. The nut 56 of the spring mechanism 50 is also operable to adjust spring tension.

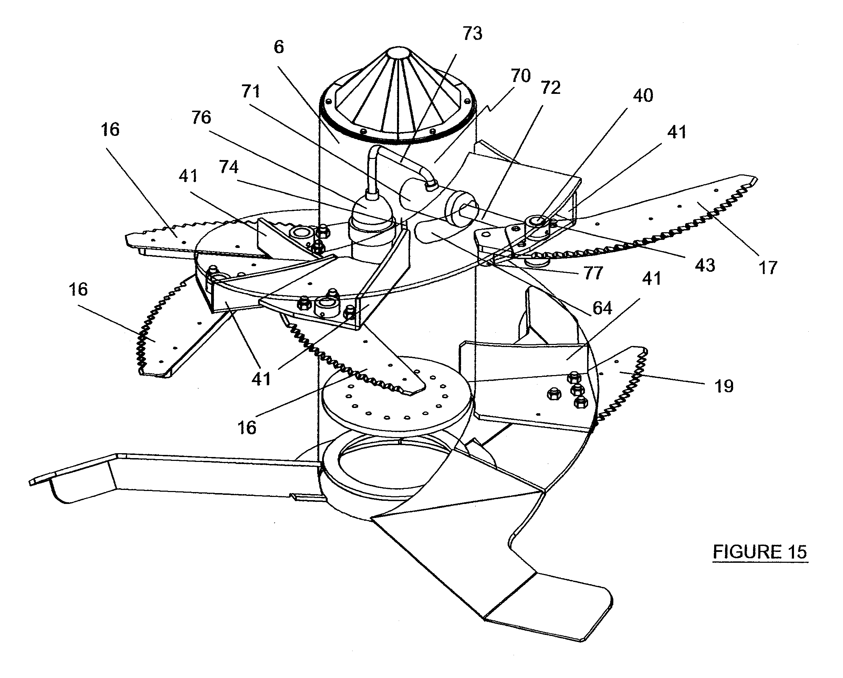

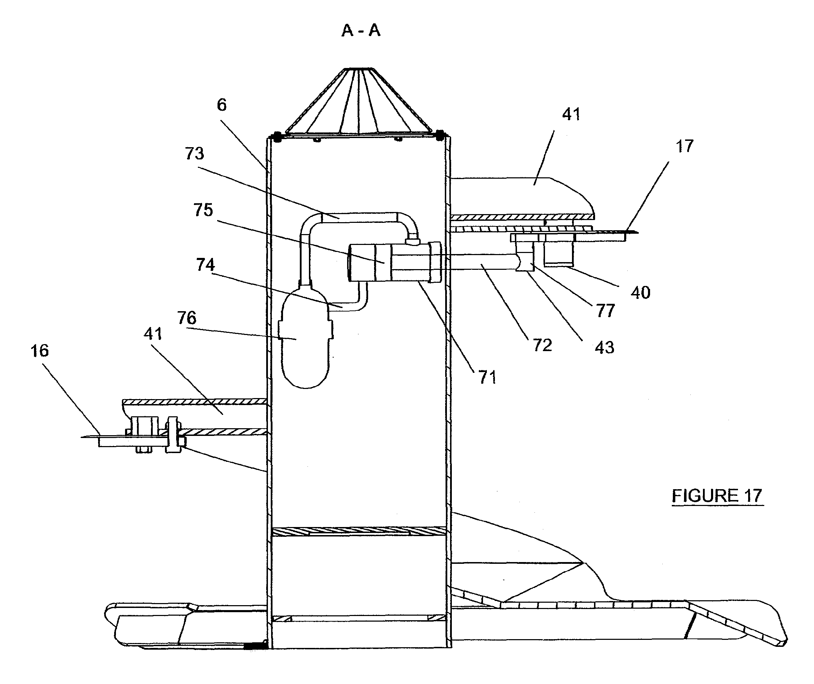

Figure 15 to 17 show an alternative embodiment of shock-absorber in the form of a hydraulic ram mechanism 70.

The hydraulic ram mechanism 70 comprises a hydraulic cylinder 71 positioned substantially horizontally inside the rotor shaft 6, a ram piston 75 having a connecting rod 72, an inlet manifold 73 and an outlet manifold 74.

The connecting rod 72 projects outside the rotor shaft 6 via slot 64 and is pivotally connected with one end of a knife blade 16, 17 via pin 43.

The hydraulic ram mechanism 70 is operable to allow the connecting rod 72 to extend outwardly from the body of the rotor shaft 6 when a knife blade 16, 17 sweeps backwards relative to the direction of rotation of the rotor shaft 6 as a result of encountering high resistive forces due to heavy/dense fodder and to retract the connecting rod 72 once the resistive forces are removed thus bringing the knife blade 17 into its initial neutral position when the heavy/dense fodder has been cut.

The hydraulic ram mechanism 70 rotates with the rotor shaft 6 and has a second axis of rotation parallel to the axis of rotation of the rotor shaft 6 to allow the mechanism 70 to rotate relative to the rotor shaft 6. This enables tip 77 of the connecting rod 72 to follow the arcuate path of the pin 43 when a knife blade 16, 17 sweeps backwards or forwards relative to the direction of rotation of the rotor shaft 6 while the connecting rod 72 extends outwardly or inwardly from the rotor shaft 6.

Optionally, the hydraulic ram mechanism 70 can be positioned outside the rotor shaft 6. In this case the mutual disposition of the parts of the hydraulic mechanism 70 can be adjusted accordingly.

Unlike knife blades 16, the knife blade 17 is positioned at the highest point on the auger and has a greater length than the knife blades 16 in order to quickly break up large masses of material delivered into the container.

A knife 19 positioned at the lowest point on the auger differs from knife blades 16 in that it has a shorter length compared to the knife blades 16 and is rigidly attached to the auger.

It will be appreciated that the invention is not limited to the specific details described herein, which are given by way of example only and that various modifications and alterations are possible without departing from the invention

## Claims

1. A fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms projecting to the container sides close to the container base and aiding the movement of material during the use of the apparatus, the mixing arms having deflecting surfaces adapted to lift material as the rotor turns and anti-clogging means located above the outlet to prevent fodder material above the outlet from clogging the outlet when the apparatus is in dispensing mode and the discharge door is clear.

2. A fodder mixing and dispensing apparatus as claimed in Claim 1, in which the anti-clogging means comprises a shelf.

3. A fodder mixing and dispensing apparatus as claimed in Claim 2, in which the shelf is mounted on the inside of the container above the outlet door, projects downwards and inwards at an angle from the container sides, rises in the direction of the auger spiral, has a wider portion proximal the auger and a narrower portion distal the auger and the shelf has a cover protruding from the edge of the shelf at the widest portion of the shelf into the interior of the container and out to the container sides.

4. A fodder mixing and dispensing apparatus as claimed in Claim 3, in which the cover extends along a part of the length of the shelf.

5. A fodder mixing and dispensing apparatus as claimed in Claim 2, 3 and 4, in which one edge of the shelf is operable to slidably move along the container wall and the opposite edge is pivotally connected to the cover, said cover being connected pivotally to the container wall, thereby allowing the extent of the proj ection of the shelf into the container to be varied.

6. A fodder mixing and dispensing apparatus as claimed in Claim 1, in which the anti-clogging means comprise a rotatable impeller mounted above the outlet.

7. A fodder mixing and dispensing apparatus as claimed in Claim 6, in which the impeller comprises an elongate cylindrical body having vanes protruding from its surface, the vanes extending along a part of the length of the cylindrical body of the impeller; and is operable to move material located around it away from the outlet.

8. A fodder mixing and dispensing apparatus as claimed in Claim 1, in which container walls taper downwards to the base of the container and inwards to the centre of the base of the container.

9. A fodder mixing and dispensing apparatus as claimed in Claim 1, in which the mixing arms have their upper surfaces inclined rearwards and upwards relative to the direction of rotation of the auger and the ends of the mixing arms pass close to the container outlet door as the rotor turns.

10. A fodder mixing and dispensing apparatus as claimed in Claim 1, in which the auger comprises knife blades, each knife blade extending outwardly from an auger flight and, optionally, sweeping back from the direction of rotation of the auger.

11. A fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms projecting to the container sides close to the container base and aiding the movement of material during the use of the apparatus, the mixing arms having deflecting surfaces adapted to lift material as the rotor turns and including an elevator pivotally mounted on a support, the support being operable to move between a position in which the elevator receives the material discharged from the outlet door of the container of the apparatus of the invention and a transport position; and the elevator being operable to be moved between a lowered and a raised orientation.

12. A fodder mixing and dispensing apparatus as claimed in any of the preceding claims, in which retainer wings are located along front and rear walls of the container on the inside of the container at a height above the top of the auger and below the top of the container; and optionally the retainer wings slope downwards and inwards

13. A fodder mixing and dispensing apparatus as claimed in Claim 12, in which a plate or a knife is mounted externally on the container and is operable to project into the container.

14. A fodder mixing and dispensing apparatus as claimed in Claim 13, in which the container outlet door has angled sides assisting in the discharge of the material.

15. A fodder mixing and dispensing apparatus comprising a container having an inlet for the receipt of fodder, an outlet in a wall of the container, a centrally located rotor with a vertically extending axis of rotation and a constant diameter auger about the rotor, the auger being operable to drive material being mixed in an upward direction; said auger having mixing arms at the auger base, the mixing arms proj ecting to the container sides close to the container base and aiding the movement of material during the use of the apparatus, the mixing arms having deflecting surfaces adapted to lift material as the rotor turns wherein one or more pivotal blade members are mounted on the auger so as to assist in the chopping of the fodder, the or each blade member being pivotal against a stop in a direction opposite to the rotation of the auger on encountering a large mass of fodder thereby shortening the blade length of the blade member and thereby reducing the power required to cut through the fodder.

16. A fodder mixing and dispensing apparatus as claimed in Claim 15, in which the or each blade member is provided with biasing means operable to return the blade member to its fully extended position.

17. A fodder mixing and dispensing apparatus as claimed in Claim 16, in which the or each blade member is provided with an adjusting mechanism allowing a sweep back angle of the blade relative to the direction of rotation of the auger to be adjusted.

18. A fodder mixing and dispensing apparatus as claimed in Claim 17, in which the adjusting mechanism is pivotally connected with the blade member.

19. A fodder mixing and dispensing apparatus as claimed in Claim 17 or 18, in which the adjusting mechanism comprises an adjusting means allowing the sweep back angle of the blade relative to the direction of rotation of the auger be adjusted and set prior to the use of the apparatus.

20. A fodder mixing and dispensing apparatus as claimed in Claim 19, in which the adjusting means comprises fixing means for fixing the knife blade at one of a range of predetermined sweep back angles relative to the direction of rotation of the auger.

21. A fodder mixing and dispensing apparatus as claimed in Claim 20, in which the biasing means is a spring mechanism or a hydraulically operated mechanism.
